(19) Europäisches Patentamt
European Patent Office
Office européen des brevets

(11) Veröffentlichungsnummer : **0 158 057 B1**

(12) # EUROPÄISCHE PATENTSCHRIFT

(45) Veröffentlichungstag der Patentschrift : **26.04.89**

(21) Anmeldenummer : **85101780.6**

(22) Anmeldetag : **19.02.85**

(51) Int. Cl.⁴ : **C 07 F 9/65**, C 07 C129/12, C 07 C103/183, C 07 C101/24, A 61 K 31/675

(54) **Neue Salze von Oxazaphosphorin-Derivaten.**

(30) Priorität : **01.03.84 DE 3407585**
**02.05.84 DE 3416159**

(43) Veröffentlichungstag der Anmeldung : **16.10.85 Patentblatt 85/42**

(45) Bekanntmachung des Hinweises auf die Patenterteilung : **26.04.89 Patentblatt 89/17**

(84) Benannte Vertragsstaaten :
**AT BE CH DE FR GB IT LI LU NL SE**

(56) Entgegenhaltungen :
**BE-A- 892 589**
**DE-A- 3 133 309**
**Römpps Chemie-Lexikon (ISBN 3-440-04 519-9) Seiten 844 und 1205**
**Die Akte enthält technische Angaben, die nach dem Eingang der Anmeldung eingereicht wurden und die nicht in dieser Patentschrift enthalten sind.**

(73) Patentinhaber : **ASTA Pharma AG**
**Weismüllerstrasse 45**
**D-6000 Frankfurt am Main 1 (DE)**

(72) Erfinder : **Engel, Jürgen, Dr.**
**Cranachstrasse 25**
**D-8755 Alzenau (DE)**
Erfinder : **Kleeman, Axel, Dr.**
**Bornweg 36**
**D-6052 Mühlheim (DE)**
Erfinder : **Niemeyer, Ulf, Dr.**
**An den Gehren 30a**
**D-4800 Bielefeld 1 (DE)**
Erfinder : **Hilgard, Peter, Dr.**
**Detmolderstrasse 16**
**D-4800 Bielefeld 1 (DE)**
Erfinder : **Pohl, Joerg, Dr.**
**Eisweg 30**
**D-4802 Halle(westf.) (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 158 057 B1**

Jouve, 18, rue St-Denis, 75001 Paris, France

**Beschreibung**

In der Belgischen Patentschrift 892 589 werden Oxazaphosphorin-4-thio-alkansulfonsäuren und bestimmte Salze hiervon der allgemeinen Formel

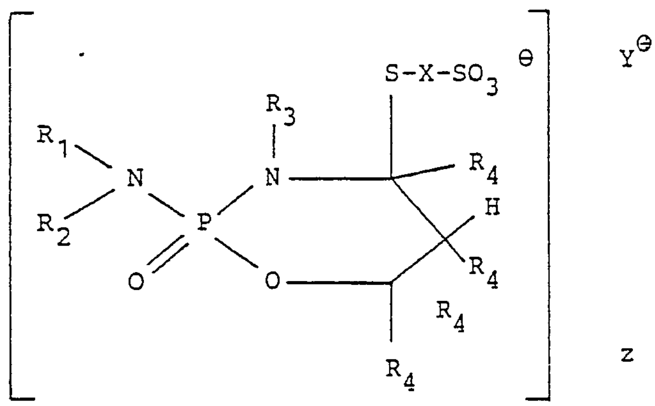

beschrieben. In der vorstehenden Formel bedeuten :

$R_1$, $R_2$ und $R_3$, die gleich oder verschieden voneinander sein können, Wasserstoff, Methyl, Ethyl, 2-Chlorethyl oder 2-Methansulfonyloxyethyl, wobei mindestens zwei dieser Reste 2-Chlorethyl und/oder 2-Methansulfonyloxyethyl sind,

$R_4$ Wasserstoff oder Methyl,

X ein gerad- oder verzweigtkettiges $C_{2-6}$-Alkylen, das eine Mercaptogruppe an dem 1-, 2-, 3-, 4- oder 5- ständigen Kohlenstoffatom der Alkylenkette haben kann, und

$Y^{\oplus}$ das Wasserstoffkation, ein Alkali- oder Erdalkalikation, das Guanidinium-, Morpholinium- oder Cyclohexylammoniumkation oder das Kation, welches sich von einem Amin der Formel $NR_5R_6R_7$ ableitet, worin die Reste $R_5$ bis $R_7$ gleich oder verschieden sind und Wasserstoff, $C_1$-$C_2$-Alkylgruppen oder Oxyethylgruppen bedeuten, oder $Y^{\oplus}$ ist das Ethylendiammoniumkation $H_3\overset{\oplus}{N}—CH_2CH_2—\overset{\oplus}{N}H_3$ oder das Piperazinoniumkation und z ist 1, wenn $Y^{\oplus}$ ein einbasisches Kation ist, oder z ist 2, wenn $Y^{\oplus}$ ein zweibasisches Kation oder das Kation einer Verbindung mit zwei einbasischen Kationen ist.

Weiterhin betrifft die Deutsche Offenlegungsschrift 31 33 309 4-Carbamoyloxy-oxazaphosphorin-Derivate der allgemeinen Formel

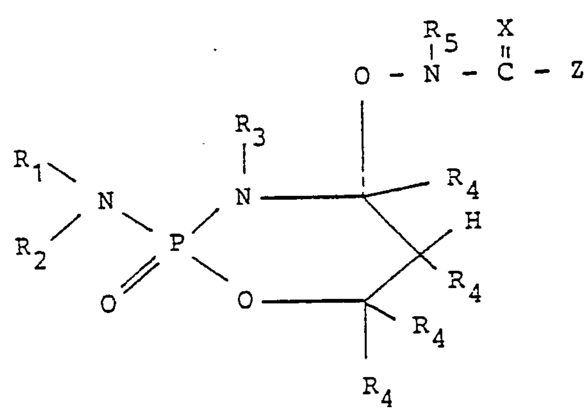

worin X Sauerstoff oder Schwefel ist, $R_1$, $R_2$ und $R_3$, die gleich oder verschieden voneinander sein können, Wasserstoff, Methyl, Ethyl, 2-Chlorethyl oder 2-Methansulfonyloxyethyl darstellen, die Reste $R_4$, die gleich oder verschieden voneinander sein können, Wasserstoff, Methyl oder Ethyl darstellen, $R_5$ Wasserstoff, $C_{1-4}$-Alkyl, Hydroxy-$C_{1-4}$-alkyl oder Phenyl ist, und Z unter anderem auch eine $C_1$-$C_{18}$-Alkylaminogruppe ist, die verschiedene Substituenten, darunter auch die Carboxygruppe enthalten kann und deren pharmazeutisch anwendbare Salze. Als Beispiel wird in dieser DE-OS eine Verbindung beschrieben worin Z die Gruppe $—NH—CH_2—CO_2H$ ist und das entsprechende Cyclohexylaminsalz.

Die Verbindung der Belgischen Patentschrift 892 589 und der Deutschen Offenlegungsschrift 31 33 309 besitzen Antitumor-Wirkung sowie eine immunsuppressive Wirkung.

Die Erfindung betrifft Salze von Oxazaphosphorin-Derivaten der allgemeinen Formel

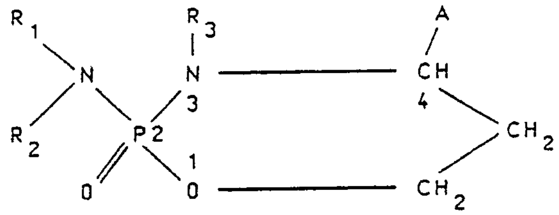

(I)

worin $R_1$, $R_2$ und $R_3$, die gleich oder verschieden voneinander sein können, Wasserstoff, Methyl, Ethyl, 2-Chlorethyl oder 2-Methansulfonyloxyethyl darstellen und dabei mindestens zwei dieser Reste 2-Chlorethyl und/oder 2-Methansulfonyloxyethyl sind und A die Gruppe —S—alk—$SO_3H$ oder —N(OH)—CONH—alk—$CO_2H$ ist und alk einen, gegebenenfalls eine Mercaptogruppe enthaltenden, $C_2$-$C_6$-Alkylenrest darstellt, wobei alk auch —$CH_2$— sein kann, falls an der Gruppe alk die Carboxygruppe sitzt, mit Homocysteinthiolacton oder α-Amino-ε-caprolactam oder einer basischen Verbindung der Formel

$$R_6 - \underset{\displaystyle NR_7R_8}{\underset{|}{CR_5}} - COR_4 \qquad (II)$$

worin $R_4$ eine Hydroxygruppe, eine Aminogruppe oder eine $C_1$-$C_6$-Alkoxygruppe ist, $R_5$ Wasserstoff oder eine Difluormethylgruppe ist, $R_6$ Wasserstoff, einen Indolyl-(3)-methylrest, Imidazolyl-(4)-methylrest, eine $C_1$-$C_{10}$-Alkylgruppe oder eine $C_1$-$C_{10}$-Alkylgruppe, die durch eine Hydroxygruppe, eine $C_1$-$C_6$-Alkoxygruppe, eine Mercaptogruppe, eine $C_1$-$C_6$-Alkylthiogruppe, eine Phenylgruppe, eine Hydroxyphenylgruppe, eine Amino-$C_1$-$C_6$-alkylthiogruppe, eine Amino-$C_1$-$C_6$-alkyloxygruppe, eine Aminogruppe, eine Aminocarbonylgruppe, eine Ureidogruppe ($H_2NCONH$—), eine Guanidinogruppe oder eine $C_1$-$C_6$-Alkoxycarbonylgruppe substituiert ist, bedeutet oder worin $R_6$ zusammen mit dem Strukturteil $\gtrdot CR_5(NR_7R_8)$ den Prolinrest, den 4-Hydroxy-prolinrest oder das 2-Oxo-3-amino-3-difluormethyl-piperidin bildet und die Reste $R_7$ und $R_8$ Wasserstoff oder $C_1$-$C_6$-Alkylreste darstellen.

Die Erfindung betrifft weiterhin ein Verfahren zur Herstellung von Salzen von Oxazaphosphorin-Derivaten der zuvor angegebenen Formel I, welches dadurch gekennzeichnet ist, daß man

a) eine Verbindung der allgemeinen Formel

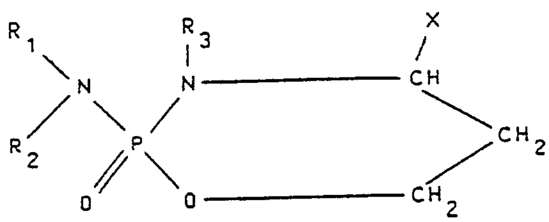

(III)

worin X eine Hydroxygruppe oder eine $C_1$-$C_4$-Alkoxygruppe ist, mit dem Salz der Verbindung

$$AH \qquad (IV)$$

worin A die angegebenen Bedeutungen hat und die basische Salzkomponente Homocysteinthiolacton, α-Amino-ε-caprolactam oder die basische Verbindung der Formel II mit den angegebenen Bedeutungen für die Reste $R_4$ bis $R_8$ ist oder zuerst mit der Verbindung AH und anschließend mit den zuvor genannten basischen Verbindungen umsetzt oder eine Verbindung der allgemeinen Formel III, worin X eine gegebenenfalls duch eine Carboxygruppe, eine Hydroxygruppe oder $C_1$-$C_4$-Carbalkoxygruppe substituierte $C_1$-$C_{10}$-Alkylthiogruppe, eine Benzylthiogruppe oder eine $C_1$-$C_6$-Alkanoylthiogruppe ist, oder worin X die Gruppe —N(OH)—CO—NHR darstellt und R Wasserstoff, eine $C_1$-$C_6$-Alkylgruppe, eine Benzylgruppe oder eine gegebenenfalls durch $C_1$-$C_4$-Alkylreste oder Halogen substituierte Phenylgruppe bedeutet, oder worin X die Gruppe A ist und der Rest X auch in der Salzform vorliegen kann, mit dem Überschuß einer Verbindung der Formel

$$A'H \qquad (V)$$

oder eines Salzes dieser Verbindung A'H oder mit Homocysteinthiolacton, α-Amino-ε-caprolactam oder der basischen Verbindung der Formel II mit den angegebenen Bedeutungen für die Reste $R_4$ bis $R_8$ umsetzt, wobei A' von A verschieden ist und eine der für A angegebenen Bedeutungen hat oder

b) eine Verbindung der Formel I oder das Salz einer Verbindung der allgemeinen Formel I mit Homocysteinthiolacton, α-Amino-ε-caprolactam oder einer basischen Verbindung der Formel II mit den angegebenen Bedeutungen für $R_4$ bis $R_8$ beziehungsweise mit deren Salzen unter Bildung des entsprechenden Salzes umsetzt

und gegebenenfalls in den erhaltenen Verbindungen die basische Komponente oder den Säurewasserstoff der Gruppe A, falls diese nicht als Salz vorliegt, gegen eine andere basische Verbindung im Rahmen der hierfür gegebenen Definition austauscht.

Die erfindungsgemäßen Verbindungen besitzen eine starke Antitumor-Wirksamkeit und können insbesondere zur Bekämpfung von Krebs verwendet werden. Gegenüber den vorbekannten Verbindungen der Belgischen Patentschrift 892 589 und der Deutschen Offenlegungsschrift 31 33 309 besitzen sie beispielsweise eine verminderte Toxizität (zum Beispiel verminderte akute Toxizität und leukotoxische Wirkung) und weisen daher einen verbesserten therapeutischen Index und eine bessere lokale und systemische sowie venöse Verträglichkeit auf. Weiterhin besitzen die erfindungsgemäßen Verbindungen eine verminderte immunsuppressive Wirkung, eine verminderte lokale Gewebereizung und häufig geringere hämolytische Wirkung. Darüberhinaus besitzen die erfindungsgemäßen Verbindungen keine beziehungsweise nur geringe Kreislaufnebenwirkungen (zum Beispiel sympatikomimetische Wirkungen). Auch wird der Blutdruck weniger störend beeinflußt.

Die Verbindungen der Formel I besitzen die folgende Struktur :

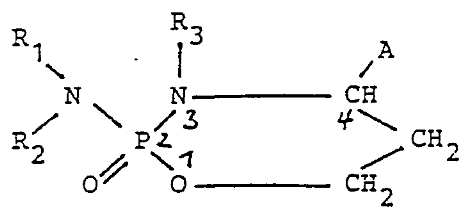

worin $R_1$, $R_2$, $R_3$ und A die hierfür angegebenen Bedeutungen haben. Gegenstand des Anspruchs 1 sind die Salze solcher Verbindungen der Formel I mit Homocysteinthiolacton oder α-Amino-ε-caprolactam oder einer Verbindung der Formel II.

Der Alkylenrest (alk) der Formel I kann gerade oder verzweigt sein. Beispiele hierfür sind Methylen, Dimethylen-, Trimethylen-, Tetramethylen-, Pentamethylen- oder Hexamethylenrest oder auch zum Beispiel die Reste

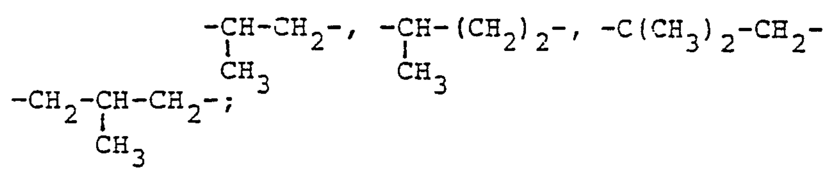

oder

insbesondere besteht die Kette alk aus 2 oder 3 C-Atomen, falls sie unverzweigt ist. Falls alk verzweigt ist, besteht der Teil, welcher an die Säuregruppe und an das Schwefel- beziehungsweise Stickstoffatom gebunden ist, insbesondere aus 2 oder 3 C-Atomen. Falls an der Gruppe alk die Carboxygruppe sitzt, ist alk vorzugsweise $—CH_2—$. Falls der Rest alk eine Mercaptogruppe enthält (dies kann insbesondere der Fall sein, falls es sich um die Gruppe $—S—alk—SO_3H$ handelt), kann diese Mercaptogruppe an dem 1-, 2-, 3-, 4- oder 5-ständigen Kohlenstoffatom von alk sitzen. Die Zählung beginnt mit dem C-Atom an dem die saure Gruppe, zum Beispiel die $—SO_3H$-Gruppe sitzt. Insbesondere handelt es sich hierbei um den $—CH_2—CH(SH)—CH_2$-Rest.

Vorzugsweise kommen solche Verbindungen in Frage, wo $R_3$ Wasserstoff ist, $R_1$ und $R_2$ jeweils 2-Chlor-ethyl sind und A die Gruppe $—S—CH_2—CH_2—SO_3H$ oder $—N(OH)—CO—NH—CH_2—CO_2H$ ist.

Die in der Formel II vorkommenden Alkylgruppen, Alkoxygruppen, Alkylthiogruppen können gerade oder verzweigt sein. Die $C_1$-$C_{10}$-Alkylgruppe enthält vorzugsweise 1-6 Kohlenstoffatome. Bei den Alkoxygruppen und Alkylthiogruppen handelt es sich vorzugsweise um solche mit 1-4, insbesondere 1-2 C-Atomen ; dasselbe gilt hinsichtlich der Reste $R_7$ und $R_8$, falls diese Alkylreste sind. Falls in der Formel II $R_6$ eine Alkylgruppe ist, welche eine Amino-$C_1$-$C_6$-alkylthio-($C_1$-$C_6$-alkoxy)gruppe enthält, dann handelt es sich vorzugsweise um folgende Gruppen : $H_2N—CH_2—CH_2—S—CH_2—$ oder $H_2N—CH_2—CH_2—O—CH_2—$.

Bei den Verbindungen der Formel II handelt es sich vorzugsweise um solche Verbindungen, wo $R_4$ eine Hydroxygruppe ist und die Reste $R_5$, $R_7$ und $R_8$ Wasserstoff sind und $R_6$ insbesondere die Bedeutungen annehmen kann, die hierfür im folgenden angegeben sind. Bevorzugte basische Verbindungen der Formel II sind beispielsweise solche, wo $R_4$ eine Hydroxygruppe, $R_5$ Wasserstoff oder Difluormethyl, $R_6$ eine $C_1$-$C_{10}$-Alkylgruppe, insbesondere $C_1$-$C_6$-Alkylgruppe, die (vorzugsweise in 2-, 3-, 4-, 5- oder 6-Stellung ; Zählung beginnt stets an der Verknüpfungsstelle des Alkylrestes mit dem

Restmolekül) eine Aminogruppe (insbesondere in 3- oder 4-Stellung), eine Amino-$C_2$-$C_4$-alkylthiogruppe, eine Amino-$C_2$-$C_4$-alkoxygruppe, einen Guanidinorest, einen Imidazolyl-(4)-methylrest oder einen Indolyl-(3)-methylrest enthält und $R_7$ und $R_8$ Wasserstoff oder $C_1$-$C_4$-Alkylreste bedeuten ; oder Aminosäure-Derivate der Formel II, wo $R_4$ eine Aminogruppe oder eine $C_1$-$C_4$-Alkoxygruppe, $R_5$ Wasserstoff, $R_6$ Wasserstoff, eine Phenylmethylgruppe, eine 4-Hydroxyphenylmethylgruppe oder eine $C_1$-$C_6$-Alkylgruppe, die (vorzugsweise in 2-, 3-, 4-, 5- oder 6-Stellung) eine Hydroxygruppe, eine Mercaptogruppe, eine $C_1$-$C_4$-Alkylthiogruppe, eine Aminocarbonylgruppe, eine $C_1$-$C_4$-Alkoxycarbonylgruppe oder Ureidogruppe enthält und $R_7$ und $R_8$ Wasserstoff oder $C_1$-$C_4$-Alkylreste bedeuten.

Bei den vorstehend genannten Aminosäuren beziehungsweise Aminosäurederivaten werden die Salze beispielsweise jeweils aus einem Mol Oxazaphosphorin I und einem Mol der Verbindung II gebildet.

Weiterhin kommen als basische Verbindungen der Formel II beispielsweise solche in Frage, wo $R_4$ eine Aminogruppe oder eine $C_1$-$C_4$-Alkoxygruppe ist, $R_5$ Wasserstoff oder Difluormethyl, $R_6$ eine $C_1$-$C_{10}$-Alkylgruppe, insbesondere $C_1$-$C_6$-Alkylgruppe, die (vorzugsweise in 2-, 3-, 4- oder ω-Stellung) eine Aminogruppe, eine Amino-$C_2$-$C_4$-alkylthiogruppe, eine Amino-$C_2$-$C_4$-alkoxygruppe, einen Guanidinorest, einen Imidazolyl-(4)-methylrest oder einen Indolyl-(3)-methylrest enthält und $R_7$ und $R_8$ Wasserstoff oder $C_1$-$C_4$-Alkylreste bedeuten. Bei den zuletzt genannten Aminosäurederivaten werden die Salze beispielsweise jeweils aus 2 Mol Oxazaphosphorin und 1 Mol des Aminosäurederivats der Formel II gebildet.

Einzelbeispiele für Verbindungen der Formel II sind : Asparaginsäurediamid (DL-Form), Asparaginsäurediethylester (L-Form), Citrullinamid ($H_2N—CO—NH—(CH_2)_3—CH(NH_2)—CONH_2$, L-Form), Ornithinethylester (L-Form), Arginin, Argininamid (L-Form), 4-Thialysin ($H_2N—CH_2—CH_2—S—CH_2—CH(NH_2)—COOH$), 2,6-Diamino-önanthsäure (ε-Methyllysin), 4-Oxalysin ($H_2N—CH_2CH_2—O—CH_2—CH(NH_2)—COOH$), Glycinamid, N,N-Dimethylglycinamid sowie der entsprechende Methylbeziehungsweise Ethylester, Prolinamid, Hydroxyprolinamid, Phenylalaninamid, der Methyl- beziehungsweise Ethylester des Alanins oder des Phenylalanins, Homocysteinthiolacton (DL-Form), α-Aminc-ε-caprolactam (D(+)-Form)), Lysin (insbesondere L-Lysin), Difluormethyl-ornithin (DL- oder L-Form), Valinmethylester (L-Form), Threoninethylester, Histidinmethylester, Histidinamid, Alaninamid, Ornithin.

In den erfindungsgemässen Salzen liegen für den Fall, daß in der Verbindung II $R_4$ eine Aminogruppe oder eine Alkoxygruppe ist, und sonst keine basische Gruppe vorhanden ist oder für den Fall, daß $R_4$ die Hydroxygruppe ist und sonst aber eine basische Gruppe vorhanden ist, Verbindung I (Säure-Komponente) und Verbindung II (basische Komponente) praktisch im Verhältnis 1 : 1 vor. (Dies gilt auch, falls die basische Komponente Homocysteinthiolacton oder α-Amino-ε-caprolactam ist.) Ist andererseits in der basischen Komponente II $R_4$ eine Aminogruppe oder eine Alkoxygruppe und enthält diese ausser der α-ständigen Aminogruppe noch eine weitere basische Gruppe, dann ist im allgemeinen das Verhältnis von Verbindung I zu Verbindung II 2 : 1. Bei den erfindungsgemässen Salzen handelt es sich um die neutralen Salze. Im Falle der sulfonsauren Salze weisen sie zum Beispiel pH-Werte zwischen 3,5-6 auf. Falls es sich um die carbonsauren Salze handelt, liegen die pH-Werte zum Beispiel zwischen 6-9, insbesondere 6-8.

Zu dem Verfahren a)

Das Verfahren wird in einem Lösungsmittel bei Temperaturen zwischen —60 °C und + 90 °C, vorzugsweise —30 °C bis + 60 °C, insbesondere —20 bis + 30 °C durchgeführt, das heisst gegebenenfalls unter Kühlen, bei Raumtemperatur oder unter Erwärmen. Die Umsetzung kann in Anwesenheit eines sauren Katalysators, wie einer anorganischen oder organischen Säure wie zum Beispiel Trichloressigsäure, p-Toluolsulfonsäure, Trifluormethansulfonsäure oder auch einer Lewissäure wie $AlCl_3$, $ZnCl_2$, $TiCl_4$, Bortrifluorid-Etherat durchgeführt werden. Für die Umsetzung wird zum Beispiel auf einen pH zwischen 1 und 8, vorzugsweise 2 und 6 eingestellt. Dies gilt insbesondere dann, wenn die Ausgangskomponenten als Salze eingesetzt werden, gegebenenfalls auch wenn die freien Säuren eingesetzt werden und A insbesondere die Carboxygruppe enthält.

Als Lösungsmittel kommen zum Beispiel in Betracht : Wasser, Alkohole, insbesondere Alkanole mit 1-6 C-Atomen wie Methanol, Ethanol, Propanol oder Isobutanol, Alkylketone mit jeweils 1-4 C-Atomen wie insbesondere Aceton, Methylethylketon, aprotische Lösungsmittel (zum Beispiel Dimethylsulfoxid, Acetonitril, N-Methyl-pyrrolidon, Dimethylformamid, Hexamethylphosphorsäuretriamid), halogenierte Kohlenwasserstoffe mit 1-3 C-Atomen wie Chloroform, Ethylendichlorid, gesättigte cyclische Ether wie Tetrahydrofuran, Dioxan, gesättigte niedere aliphatische Ether wie Diethylether oder ähnliche Lösungsmittel beziehungsweise Gemische aus mehreren solcher Lösungsmittel.

Falls in der Ausgangsverbindung III das Symbol X die Hydroxy- oder Alkoxygruppe ist, kann die Umsetzung auch in 2 Schritten erfolgen, indem zum Beispiel die Verbindung III zuerst mit der Verbindung AH (ohne Ansäuern) umgesetzt wird und anschliessend zu der Reaktionsmischung, gegebenenfalls nach Einengen und Zusatz eines anderen der in Betracht kommenden Lösungsmittels, die basische Komponente II beziehungsweise Homocysteinthiolacton oder α-Amino-ε-caprolactam in einem Lösungsmittel zugegeben wird.

Die Verwendung einer Verbindung III, worin X die Hydroxygruppe oder eine Alkoxygruppe ist, eignet sich besonders, falls die Endprodukte kristallin anfallen.

Falls X nicht Hydroxy oder Alkoxy ist, oder falls X in der Salzform vorliegt, wird die Verbindung A'H

oder deren Salz im Überschuß eingesetzt, beispielsweise 1,5-10 Mol, vorzugsweise 2-5 Mol der Verbindung A'H oder deren Salz pro 1 Mol Verbindung III. Der pH-Wert der Reaktionslösung wird zum Beispiel auf 5,5-9, vorzugsweise 6,5-8 mittels Alkalilauge oder mit einem Amin (zweckmäßig dem Amin, welches bereits in dem eingesetzten Salz als basische Komponente vorliegt) eingestellt ; unter Umständen kann auch ein pH-Wert bis 12 günstig sein. Dies gilt insbesondere dann, wenn die Ausgangskomponenten als Salze eingesetzt werden, gegebenenfalls auch wenn die freien Säuren eingesetzt werden und A insbesondere die Carboxygruppe enthält. Die Reaktionstemperatur ist beispielsweise 10-90 °C, vorzugsweise 25-60 °C. Die Reaktionszeit beträgt zum Beispiel einige Sekunden bis zu mehreren Stunden. Anschliessend wird zum Beispiel die Reaktionslösung auf unter 10 °C abgeschreckt und mit einer Mineralsäure ($H_2SO_4$, HCl, Phosphorsäure) einer Sulfonsäure (zum Beispiel Mercapto-$C_1$-$C_6$-alkansulfonsäure) oder einem Ionenaustauscher ($H^+$-Form) auf einen pH zwischen 4 bis 5,5 oder auch 7 gebracht.

Die Isolierung der Verfahrensprodukte kann beispielsweise erfolgen : durch Kristallisation oder durch ein chromatographisches Verfahren, insbesondere durch präparative Hochdruckflüssigchromatographie, gegebenenfalls mit nochmals anschliessender Umsetzung in die gewünschte Salzform an einem entsprechend beladenen Kationenaustauscher.

Falls X der Formel III die Gruppe A ist und diese in der Salzform vorliegt, kommen beispielsweise solche Salze in Frage, die in der Deutschen Offenlegungsschrift 31 33 309 oder der Belgischen Patentschrift 892 589 beschrieben sind. Beispielsweise kommen die Ammoniumsalze, Cyclohexylammoniumsalze oder Guanidiniumsalze in Frage. Selbstverständlich können auch andere übliche Salze, beispielsweise für eine Racematspaltung übliche optisch aktive Basen eingesetzt werden, die analog den dort beschriebenen Methoden herstellbar sind.

Die Ausgangsstoffe der Formel III sind beispielsweise aus folgenden Literaturstellen bekannt beziehungsweise können analog den dort angegebenen Methoden erhalten werden : Belgisches Patent 892 589, Deutsche Offenlegungsschrift 31 33 309, Tetrahedron Letters Nr. 10 (1979), Seiten 883-886, Cancer Treatment Reports, Band 60, Nr. 4 (1976), Seiten 429-435. Falls X eine gegebenenfalls substituierte $C_1$-$C_{10}$-Alkylthiogruppe ist, kommen insbesondere solche Verbindungen der Formel III in Frage, wo X eine $C_1$-$C_6$-Alkylthiogruppe, die Gruppe $—S—(CH_2)_n—CO_2H$ (n = 1-6, insbesondere 1-3), $—S—(CH_2)_n—OH$ (n = 2-6, insbesondere 2-4) oder $—S—(CH_2)_n—CO—OC_2H_5$ (n = 1-6, insbesondere 1-3) ist. Falls X eine $C_1$-$C_6$-Alkanoylthiogruppe ist, handelt es sich insbesondere um die Acetylthiogruppe. Falls X die Gruppe —N(OH)—CO—NHR ist und R eine $C_1$-$C_6$-Alkylgruppe ist (gerade oder verzweigt), besteht diese insbesondere aus 1-4, vorzugsweise 1-2 C-Atomen.

Die Herstellung der Ausgangssalze AH der Formel IV beziehungsweise der Ausgangssalze A'H der Formel V kann beispielsweise durch Umsetzung einer Verbindung AH oder A'H mit einer basischen Verbindung oder Homocysteinthiolacton oder α-Amino-ε-caprolactam oder einer Verbindung der Formel II mit oder ohne Lösungsmittel bei Temperaturen zwischen 0 und 40 °C erfolgen. Als Lösungsmittel kommen zum Beispiel in Frage : Wasser, $C_1$-$C_6$-Alkanole (Methanol, Ethanol), niedere aliphatische Ketone (Aceton), cyclische Ether (Dioxan), chlorierte Kohlenwasserstoffe (Methylenchlorid, Ethylendichlorid, Chloroform, Kohlenstofftetrachlorid), gesättigte niedere aliphatische Ether (Diethylether), aprotische Lösungsmittel (zum Beispiel Dimethylformamid, Dimethylsulfoxid, Acetonitril) oder Gemische dieser Mittel.

Die Herstellung derartiger Salze kann beispielsweise auch in der Weise erfolgen, daß man ein Alkalisalz (Natriumsalz) der Säure AH beziehungsweise A'H in Wasser löst (zum Beispiel 1 bis 20 % Lösung ; % = Gewichtsprozente), diese Lösung durch eine Säule mit einem stark sauren Ionenaustauscher ($H^-$-Form, 3facher Überschuss) laufen lässt und die freie Säure im Eluat mit der basischen Komponente neutralisiert, im Vakuum einengt und gegebenenfalls den Rückstand mit einem niederen Alkohol (Methanol, Ethanol) einem niederen Keton (Aceton) oder einem Ether (Diethylether) umkristallisiert.

Zu dem Verfahren b)

Dieses Verfahren wird bei Temperaturen zwischen 0-25 °C, vorzugsweise 0-5 °C durchgeführt. Als Lösungsmittel für dieses Verfahren kommen zum Beispiel in Betracht : Wasser, niedere aliphatische Alkohole, niedere aliphatische Ketone oder Gemische dieser Mittel. Es wird 1 Mol der Komponente I mit 1 Mol der Komponente II umgesetzt. Es ist zweckmässig, in einem pH-Bereich zwischen 3 bis 8 zu arbeiten. Bei Verwendung von Verbindungen I, worin A die $S—alk—SO_3$-Gruppe (oder ein Salz hiervon) ist, arbeitet man vorzugsweise bei einem pH zwischen 3-6, vorzugsweise 3,8-5, insbesondere pH 4 ; bei Verwendung von Verbindungen I, worin A die $—N(OH)—CO—NH—alk—CO_2H$-Gruppe (oder ein Salz hiervon) ist, arbeitet man vorzugsweise bei pH-Werten zwischen 6-8, vorzugsweise pH 7.

Häufig ist der Zusatz eines Puffers günstig. Als Puffersysteme mit einem pH-Bereich zwischen 3,8 bis 5,0 kommen zum Beispiel in Betracht : Citronensäure/Natriumcitrat ; Essigsäure/Natriumacetat ; Phosphorsäure/Natriumdihydrogenphosphat ; Weinsäure/Natriumtartrat ; Ameisensäure/Natriumformiat ; Natriumhydrogenphosphat/Citronensäure ; Bernsteinsäure/Bernstein-Natriumsalz ; Propionsäure/Natriumpropionat ; Aconitsäure/Aconitsäure Natriumsalz ; β,β-Dimethylglutarsäure und dessen Natriumsalz ; Maleinsäure/Natriummaleat ; Verbindung II/Citronensäure. Als Puffer für einen pH-Bereich 6 bis 8

kommen zum Beispiel in Frage: Na-Citrat/NaOH, Tris-(hydroxymethyl)-aminomethan-Maleat/NaOH, $KH_2PO_4$/NaOH, $KH_2PO_4$/$Na_2HPO_4$.

Zur Herstellung der Puffer kann statt der Natronlauge auch Homocysteinthiolacton oder α-Amino-ε-caprolactam oder eine basische Verbindung der Formel II verwendet werden, so dass der Puffer bereits die basische Komponente enthält, die auch im Endprodukt der Formel I vorliegt.

Der Austausch der basischen Komponente eines Salzes der Verbindung I gegen eine erfindungsgemässe basische Komponente kann zum Beispiel an sauren Ionenaustauschern erfolgen, die mit Homocysteinthiolacton, α-Amino-ε-caprolactam oder der basischen Verbindung II beladen sind. In diesem Falle wird die basische Verbindung II (die nun an die sauren Gruppen des Ionenaustauschers gebunden ist), im Überfluß eingesetzt (zum Beispiel 2 bis 10 Mol, vorzugsweise 5 Mol der Komponente II auf 1 Mol der Komponente I). Als saure Ionenaustauscher kommen zum Beispiel solche in Frage, deren polymere Matrix Sulfonsäure-Gruppen oder Carbonsäuregruppen tragen. Die Matrix der Ionenaustauscher kann zum Beispiel aus einem Polystyrolharz gegebenenfalls mit einem Gehalt von 2 bis 16, vorzugsweise 4 bis 8 an Divinylbenzol oder auch einem Phenolharz bestehen. Der Polystyrolionenaustauscher ist vorzugsweise gelförmig. Die Beladung des Ionenaustauschers mit der basischen Komponente kann beispielsweise auf folgende Weise erfolgen: 150 ml Ionenaustauscherharz (1,2 mval/ml*) in einer Säule (Durchmesser ca. 4 cm) mit Kühlmantel werden mit Salzsäure regeneriert, mit destilliertem Wasser neutral und chloridionenfrei gewaschen. Anschliessend wird der Austauscher mit einer 10 %igen wässrigen Lösung der basischen Verbindung (220 mmol) behandelt und mit destilliertem Wasser neutral gewaschen. Zusätzlich kann man Ionenaustauscher mit einem Puffer (Citronensäure/Citrat beziehungsweise Essigsäure/Acetat) von etwa pH 4 behandeln und anschliessend den Puffer wieder herauswaschen. Des weiteren kann der Ionenaustauscher auch unter Verwendung von neutralen Aminosäure-Salzen der Formel II oder neutralen Salzen des Homocysteinthiolactons oder α-Amino-ε-caprolactams (zum Beispiel Hydrochloride oder Hydrobromide) beladen werden.

Falls Ionenaustauscher verwendet werden, ist es günstig, den Puffer in die Vorlage für das Eluat zu geben. In einigen Fällen ist auch die gemeinsame Elution des Salzes mit dem Puffer und/oder dem Salz einer Mercapto-$C_2$-$C_6$-alkansulfonsäure durch den Ionenaustauscher vorteilhaft. Ebenso ist auch die gemeinsame Elution des Salzes mit nur dem Puffer möglich. Beispielsweise löst man die Ausgangsverbindung, das heisst die Verbindung I (A = —S—alk—$SO_3H$) oder ein übliches bekanntes Salz der Verbindung I in einem Puffer bei pH 3,8 bis 5,0, vorzugsweise pH 4,1 und gibt diese Lösung über die Ionenaustauschsäule und fängt auch das Eluat in einer entsprechenden Pufferlösung auf. Das Eluat beziehungsweise das hieraus hergestellte Lyophilisat besteht dann beispielsweise aus dem erfindungsgemässen Salz und dem Puffer und/oder dem Salz der Mercaptoalkansulfonsäure oder aus dem erfindungsgemäßen Salz und nur dem Puffer. Vorzugsweise wird das Eluat, gegebenenfalls nach Verdünnung mit Wasser, jeweils sofort eingefroren beziehungsweise lyophilisiert. Falls in der Ausgangsverbindung I das Symbol A die Gruppe —N(OH)—CO—NH—alk—$CO_2H$ ist, arbeitet man zweckmässig analog, jedoch nun bei pH-Werten zwischen 6-8 (zum Beispiel pH 7).

Man kann hierbei aber auch so vorgehen, dass man ein übliches Salz der Verbindung I (zum Beispiel Alkalisalz) in wässriger Lösung durch einen wie oben erwähnten sauren Ionenaustauscher in der $H^-$-Form laufen lässt und im Eluat die Verbindung I dann mit der basischen Komponente der Formel II beziehungsweise mit Homocysteinthiolacton oder α-Amino-ε-caprolactam neutralisiert. Diese Verfahrensmöglichkeit eignet sich besonders, wenn die Endprodukte kristallin anfallen.

Als Ausgangssalze der Verbindung der Formel I kommen beispielsweise solche in Frage, die in der Deutschen Offenlegungsschrift 31 33 309 oder der Belgischen Patentschrift 892 589 beschrieben sind. Beispielsweise kommen die Ammoniumsalze, Cyclohexylammoniumsalze oder Guanidiniumsalze in Frage. Jedoch können auch andere übliche Salze (beispielsweise Salze mit optisch aktiven Basen, die für die Racematspaltung üblich sind) eingesetzt werden, die analog den dort beschriebenen Methoden herstellbar sind.

Unter den erfindungsgemässen Oxazaphosphorin-Derivaten der Formel I werden alle möglichen Stereoisomere und Mischungen davon verstanden. Im einzelnen handelt es sich beispielsweise um cistrans-Isomere, das heisst cis- oder trans-Stellung der Gruppe A zu dem Oxo-Atom in 2-Stellung (Phosphoryl-Sauerstoff) zur Ebene des Oxazaphosphorinringes. Es handelt sich also beispielsweise um cis-Isomere und die trans-Isomere (jeweils Racemat und die entsprechenden Enantiomeren), die getrennten cis-Isomere und die getrennten trans-Isomere. Diastereomere Salze (beispielsweise wenn ein chirales Amin zur Salzbildung verwendet wird), können in bekannter Weise vorzugsweise durch fraktionierte Kristallisation getrennt werden. Die reinen Enantiomere können nach den üblichen Methoden der Racematspaltung beispielsweise durch fraktionierte Kristallisation der diasteromeren Salze aus racemischen Säuren der Formel I und optisch aktiven Basen oder gegebenenfalls durch Verwendung optisch aktiver Ausgangsprodukte nach Formel III bei der Synthese erhalten werden.

Im allgemeinen können bei der Synthese cis/trans-Gemische entstehen. Im allgemeinen entstehen Gemische, die überwiegend aus dem cis-Isomeren und zu etwa 5-10 % aus dem trans-Isomeren bestehen.

* Die Hersteller der Ionenaustauscher geben die Kapazität der Ionenaustauscher (das heisst die Menge der funktionellen Gruppen wie —$SO_3H$, —$CO_2H$) in mval/ml oder mval/g des Ionenaustauscherharzes an.

Die Verbindungen gemäss den Beispielen 1-5 bestehen beispielsweise aus dem cis-Isomeren mit weniger als 5-10 % der trans-Form.

Aus solchen Gemischen erhält man bei gut kristallisierenden Verbindungen die cis- beziehungsweise die trans-Form, insbesondere die cis-Form, kristallisiert. Führt man jedoch die Umsetzung in wasserfreien Lösungsmitteln oder in Lösungsmitteln mit geringem Wasseranteil durch, erhält man ausschliesslich oder ganz überwiegend eine einzige Form, insbesondere die cis-Form. So kann man die reine cis-Form einer nicht oder schlecht kristallisierenden Verbindung nach Formel I beispielsweise herstellen, indem eine acetonische Lösung der Verbindung nach Formel III zu einer wässrigen Lösung der Verbindung nach Formel IV oder deren Salz bei Temperaturen zwischen — 30 und + 20 °C gegeben wird und nach beendeter Umsetzung mehrmals umgefällt wird.

Die Ausgangsverbindungen nach Formel III können als racemische cis- und trans-Isomere (Darstellung siehe vorhergehende Seite), als optisch aktive cis- und trans-Form und als Mischungen davon eingesetzt werden (siehe hierzu Belgische Patentschrift 892 589 und Deutsche Offenlegungsschrift 31 33 309, Seite 12).

Zur Racematspaltung kommen beispielsweise als optisch aktive Basen zum Beispiel 1-Phenylethylamin, Brucin, Chinidin, Strychnin und Cinchonin sowie weitere Basen und Methoden in Frage, die in « Optical Resolution Procedures for Chemicals Compounds », Vol. 2, Paul Newman, 1981, Verlag Optical Resolution Information Center in Riverdale, USA, beschrieben sind. Hierzu wandelt man beispielsweise ein erfindungsgemäss racemisches Salz auf die bereits angegebene Weise in ein Salz mit einer der vorstehend genannten optisch aktiven Basen um, trennt die Enantiomeren in bekannter Weise und ersetzt dann die optisch aktive Base der so erhaltenen Enantiomeren wieder durch eine basische Verbindung gemäss der Erfindung. Die vorstehend genannten optisch aktiven Basen können aber auch bei der Synthese bei dem Verfahren a) bei der Umsetzung einer Verbindung der Formel III mit einer Verbindung der Formel IV oder V oder bei dem Verfahren b) als basische Salzkomponente eingesetzt werden. In diesem Fall ist anschliessend diese optisch aktive Base in üblicher Weise gegen die erfindungsgemässe basische Salzkomponente entsprechend der bereits angegebenen Definition auszutauschen.

Die erfindungsgemässen basischen Salzkomponenten Homocysteinthiolacton, α-Amino-ε-caprolactam sowie die Verbindungen der Formel II kommen als Racemate oder in Form der reinen Enantiomere in Betracht.

Im allgemeinen werden die L-Formen bevorzugt.

Unter den erfindungsgemässen Salzen werden sämtliche Formen verstanden, die sich aus den vorhandenen, verschiedenen asymmetrischen Kohlenstoffatomen ergeben, also zum Beispiel Racemate, optisch aktive Formen, diastereomere Formen.

Bei der Herstellung empfiehlt es sich, die erfindungsgemässen Salze nur so kurz wie möglich in Lösung zu halten, um Hydrolyse zu 4-Hydroxyoxazaphosphorinen und/oder Epimerisierung am C-4-Atom des Oxazaphosphorinringes (Umwandlung der cis-Form in die trans-Form) zu verhindern beziehungsweise möglichst gering zu halten. Falls die erfindungsgemässen Salze stärker verunreinigt sind (zum Beispiel grössere Mengen an Ausgangsverbindungen enthalten), können sie durch übliche chromatographische Methoden (insbesondere durch präparative Hochdruckflüssigchromatographie) in reiner Form erhalten werden.

Die erfindungsgemässen Salze sind stabil, besitzen Lagerfähigkeit (insbesondere bei 4 °C) und können galenisch gut verarbeitet werden. Für galenische Zubereitungen (zum Beispiel hydrolysestabile Injektionslösungen, Lyophilisate), insbesondere auch im Hinblick auf die Lagerstabilität empfiehlt es sich, bei den Sulfonsäurederivaten mit Hilfe eines üblichen Puffers (beispielsweise Citratpuffer) einen pH-Bereich von ca. 3,5-7 einzustellen. Das pH-Optimum ist hierbei pH 4,0-4,3. Für den Fall, dass der Rest A sich von der Gruppe —N(OH)—CO—NH—alk—$CO_2H$ ableitet, wird zweckmässig ein pH von 6,5-7,5 eingestellt. Diese pH-Werteinstellungen können sowohl für Lösungen und Suspensionen als auch für feste galenische Zubereitungen vorgenommen werden.

Darüberhinaus und unabhängig von dem Zusatz eines Puffers ist auch der Zusatz von 0,5 bis 5 Äquivalenten eines Salzes (zum Beispiel Alkalisalz, insbesondere Natriumsalz) einer Mercapto-$C_2$-$C_6$-alkylsulfonsäure (zum Beispiel eines Salzes der 2-Mercapto-ethansulfonsäure) und ihrer Disulfide und weiterer Thiole (zum Beispiel Cystein) vorteilhaft. Art der Thiole und Disulfide und der Modus ihrer Anwendung werden in der Europäischen Patentanmeldung 83 439 beschrieben. Als derartige Salze kommen zum Beispiel die Alkalisalze (Na, K) oder die Salze mit einer basischen Komponente gemäss der Erfindung (Verbindung der Formel II, Homocysteinthiolacton, α-Amino-ε-caprolactam) in Frage.

Der Zusatz des Salzes einer Mercapto-$C_2$-$C_6$-alkansulfonsäure kann beispielsweise durch Zugabe einer wässrigen Lösung des Sulfonsäuresalzes (Alkalisalz, zum Beispiel 20 gewichtsprozentig) zu einer wässrigen Lösung des erfindungsgemässen Salzes (vorzugsweise auf einen pH zwischen 4 und 4,3 gepuffert) erfolgen. Die so erhaltene Mischung wird dann beispielsweise lyophilisiert.

Die Vorteile bei Zusatz eines Mercaptoalkansulfonsäure-Salzes hierdurch bestehen in folgendem : Verbesserung der Lagerstabilität sowie der Stabilität in wässriger Lösung bei den erfindungsgemässen Salzen. (Dies ist beispielsweise von Bedeutung bei der Herstellung der Salze aber auch bei Auflösung von beispielsweise Lyophilisaten vor der Anwendung) ; Verbesserung bei Chemotherapie von Krebserkrankungen mittels den erfindungsgemässen Salzen, insbesondere hinsichtlich toxischer Nebenwirkungen

(vgl. Europäische Patentanmeldung 83 439, Europa-Patent 2495, Deutsches Patent 28 06 866).

Die erfindungsgemässen Salze sind zur Herstellung pharmazeutischer Zusammensetzungen beziehungsweise Zubereitungen geeignet. Die pharmazeutischen Zusammensetzungen beziehungsweise Arzneimittel enthalten als Wirkstoff einen oder mehrere der erfindungsgemässen Salze, gegebenenfalls in Mischung mit anderen pharmakologisch beziehungsweise pharmazeutisch wirksamen Stoffen. Die Herstellung der Arzneimittel kann unter Verwendung der bekannten und üblichen pharmazeutischen Trägermittel und Hilfsstoffe erfolgen.

Die Arzneimittel können beispielsweise enteral, parenteral, oral, perlingual oder in Form von Sprays angewendet werden. Die Verabreichung kann zum Beispiel in Form von Tabletten, Kapseln, Pillen, Dragees, Zäpfchen, Liquida oder Aerosolen erfolgen. Als Liquida kommen zum Beispiel in Frage : Ölige oder wässrige Lösungen oder Suspensionen, Emulsionen, injizierbare wässrige oder ölige Lösungen oder Suspensionen.

Die erfindungsgemäßen Verbindungen zeigen bei intravenöser, intraperitonealer oder oraler Applikation bei verschiedenen Experimentaltumoren der Ratte und der Maus eine gute zytostatische und kurative Wirksamkeit. Beispielsweise werden die erfindungsgemäßen Verbindungen an der Ratte 5 Tage nach intraperitonealer Implantation von $10^5$ Zellen der Leukämie L5222 mit verschiedenen Dosen intravenös, intraperitoneal oder oral appliziert und in Abhängigkeit von der Dosis eine kurative Wirkung erzielt. Als Heilung wird das Rezidiv- und Metastasenfreie Überleben der tumortragenden Tiere nach 90 Tagen definiert. Aus der mit den verschiedenen Dosen erhaltenen Häufigkeit von Heilungen wird mittels Probitanalyse nach R. Fisher als mittlere kurative Dosis (DC50) diejenige Dosis berechnet, mit der 50 % der tumortragenden Tiere geheilt werden können.

Beispielsweise werden die erfindungsgemäßen Verbindungen auch einen Tag nach intraperitonealer Implantation von $10^6$ Zellen des Yoshida-Ascites-Sarkoms AH13 mit verschiedenen Dosen intravenös, intraperitoneal oder oral verabfolgt und in Abhängigkeit von der Dosis eine kurative Wirkung erzielt.

Auch hier wird die kurative Wirkung als Rezidiv- und Metastasen-freies Überleben der tumortragenden Tiere über 90 Tage definiert.

In entsprechender Weise wird mittels Probitanalyse nach R. Fisher als mittlere kurative Dosis (DC50) diejenige Dosis berechnet, bei der 50 % der tumortragenden Tiere geheilt werden können.

Weiterhin werden beispielsweise die erfindungsgemäßen Verbindungen einmalig oder mehrmalig (4 ×) an aufeinanderfolgenden Tagen nach intraperitonealer Implantation von $10^6$ Zellen der Mäuseleukämie L1210 mit verschiedenen Dosen intravenös, intraperitoneal oder oral verabfolgt und eine zytostatische Wirkung erzielt.

Die zytostatische Wirksamkeit ist als Verlängerung der medianen Überlebenszeit der Tumortiere zu erfassen und wird als dosisabhängige prozentuale Verlängerung der Überlebenszeit gegenüber einer unbehandelten Kontrollgruppe ausgedrückt.

Die mittlere kurative Dosis liegt bei den Rattentumoren unabhängig von der Darreichungsform im Bereich von 0,1-10 mg/kg. Mit den gleichen Dosen läßt sich eine Verlängerung der medianen Überlebenszeit von 100 % bei der Mäuseleukämie L1210 erzielen.

Darüberhinaus stimulieren die erfindungsgemäßen Verbindungen in einem bestimmten niederen Dosisbereich die Antikörper-Produktion. Dieser Dosisbereich liegt zum Beispiel für die Verbindung gemäß Beispiel 5 zwischen 20-50 mg/kg Ratte (intravenös, intraperitoneal). Demgegenüber wird in dem gleichen Dosisbereich die Antikörper-Produktion von dem bekannten Antitumormittel Cyclophosphamid bereits unterdrückt.

Literatur :

N. Brock : Pharmakologische Grundlagen der Krebs-Chemotherapie.

In : A. Georgii (Hrsg), Verhandlungen der Deutschen Krebsgesellschaft Band 1, pp. 15-42, Gustav Fischer Verlag, Stuttgart (1978).

Diese curative und zytostatische Wirkung ist mit der Wirkung der bekannten Arzneimittel Cyclophosphamid und Ifosfamid vergleichbar.

Die niedrigste, bereits curativ oder zytostatisch wirksame Dosis in den angegebenen Tierversuchen ist beispielsweise

0,01 mg/kg oral
0,01 mg/kg intraperitoneal
0,01 mg/kg intravenös.

Als allgemeiner Dosisbereich für die curative und zytostatische Wirkung (Tierversuch wie oben) kommt beispielsweise in Frage :

0,01-100 mg/kg oral, insbesondere 0,1-10,0 mg/kg
0,01-100 mg/kg intraperitoneal, insbesondere 0,1-10,0 mg/kg
0,01-100 mg/kg intravenös, insbesondere 0,1-10,0 mg/kg.

Indikationen, für die die erfindungsgemäßen Verbindungen in Betracht kommen können : Maligne Erkrankungen von Mensch und Tieren.

Die pharmazeutischen Zubereitungen enthalten im allgemeinen zwischen 1 mg bis 1 g, vorzugsweise 100 bis 1 000 mg der erfindungsgemäßen aktiven Komponente(n).

Die Verabreichung kann beispielsweise in Form von Tabletten, Kapseln, Pillen, Dragees, Zäpfchen, Salben, Gelees, Cremes, Puder, Stäubepulver, Aerosolen oder in flüssiger Form erfolgen. Als flüssige Anwendungsformen kommen zum Beispiel in Frage : Ölige oder alkoholische beziehungsweise wässrige Lösungen sowie Suspensionen und Emulsionen. Bevorzugte Anwendungsformen sind Tabletten, die zwischen 10 und 200 mg oder Lösungen, die zwischen 0,1 bis 5 % an aktiver Substanz enthalten.

Die Einzeldosis der erfindungsgemäßen aktiven Komponenten kann beispielsweise liegen

a) bei oralen Arzneiformen zwischen 1-100 mg/kg, vorzugsweise 10-60 mg/kg,

b) bei parenteralen Arzneiformen (zum Beispiel intravenös, intramuskulär) zwischen 1-100 mg/kg, vorzugsweise 10-60 mg/kg,

c) bei Arzneiformen zur rektalen oder vaginalen Applikation zwischen 1-100 mg/kg, vorzugsweise 10-60 mg/kg,

d) bei Arzneiformen zur lokalen Applikation auf die Haut und Schleimhäute (zum Beispiel in Form von Lösungen, Lotionen, Emulsionen, Salben und so weiter) zwischen 1-100 mg/kg, vorzugsweise 10-60 mg/kg.

Die Dosen sind jeweils bezogen auf die freie Base.

Beispielsweise können 1-3 mal täglich 1 bis 10 Tabletten mit einem Gehalt von 10 bis 300 mg wirksamer Substanz oder zum Beispiel bei intravenöser Injektion 1 bis 2 mal täglich eine oder mehrere Ampullen von 1 bis 10 ml Inhalt mit 10 bis 250 mg Substanz empfohlen werden. Bei oraler Verabreichung ist die minimale tägliche Dosis beispielsweise 200 mg ; die maximale tägliche Dosis bei oraler Verabreichung soll nicht über 5 000 mg liegen.

Auch eine Dauer-Infusion entsprechender Dosen über 12 und mehr Stunden kann in Einzelfällen empfohlen werden.

Für die Behandlung von Hunden und Katzen liegt die orale Einzeldosis im allgemeinen zwischen ungefähr 10 und 60 mg/kg Körpergewicht ; die parenterale Dosis ungefähr zwischen 10 und 60 mg/kg Körpergewicht.

Für die Behandlung von Pferden und Vieh liegt die orale Einzeldosis im allgemeinen zwischen ungefähr 10 und 60 mg/kg Körpergewicht ; die parenterale Einzeldosis ungefähr zwischen 10 und 60 mg/kg Körpergewicht.

Die akute Toxizität der erfindungsgemäßen Verbindungen an der Maus (ausgedrückt durch die LD 50 mg/kg ; Methode nach Miller und Tainter : Proc. Soc. Exper. Biol. a. Med. 57 (1944) 261) liegt beispielsweise bei oraler Applikation zwischen 100 und 1 000 mg/kg (beziehungsweise oberhalb 1 000 mg/kg).

Die Arzneimittel können in der Humanmedizin, der Veterinärmedizin sowie in der Landwirtschaft allein oder im Gemisch mit anderen pharmakologisch aktiven Stoffen verwendet werden.

## Beispiel 1

4-(2-Sulfo-ethylthio)-Cyclophosphamid*-Glycinamidsalz

4,0 g (18 mmol) 4-Hydroxycyclophosphamid in 10 ml destilliertem Wasser werden mit 5 g (18 mmol) 2-Mercaptoethansulfonsäure-Glycinamidsalz in 40 ml Aceton versetzt. Die Reaktionslösung wird mit Trichloressigsäure auf einem pH von 4 angesäuert, 2 Stunden bei 5 °C und 20 Stunden bei — 25 °C aufbewahrt. Das Salz scheidet sich kristallin ab und wird abgesaugt, gewaschen, getrocknet und aus Wasser/Aceton umkristallisiert.

F. 90-98 °C ; Ausbeute : 7,2 g (76 % der Theorie). Das Salz enthält etwa 1 Äquivalent Aceton.

## Beispiel 2

4-[1-Hydroxy-3-carboxymethyl-ureido-(1)]-cyclophosphamid-Lysinsalz (L-Lysin)

7,5 g (24,6 mmol) 4-Ethoxycyclophosphamid und 3 g (22,4 mmol) 1-Hydroxy-3-carboxymethyl-harnstoff werden in in 50 ml trockenem Alkohol für 20 Stunden bei 0 °C aufbewahrt. Anschliessend wird die Reaktionslösung im Vakuum bei 20 °C eingeengt, der Rückstand in 200 ml Aceton aufgenommen, mit 3,3 g (22,6 mmol) L-Lysin in 25 ml Methanol versetzt und der gallertartige Niederschlag nach kurzem Stehen zentrifugiert. Der Rückstand wird in Wasser gelöst, filtriert, mit Aceton gefällt, abgesaugt und mit Aceton/Ether gewaschen.

F. 125-128 °C ; Ausbeute : 6,5 g (54 % der Theorie).

* Cyclophosphamid = 2-[2-(Bis-(2-chlor-ethyl)-amino)-2-oxo-tetrahydro-2H-1,3,2-oxazaphosphorin.

Beispiel 3

4-(2-Sulfo-ethylthio)-Cyclophosphamid-Glycinamidsalz.

Eine Lösung von 3,1 g (6,5 mmol) 4-(3-Sulfopropylthio)-Cyclophosphamid-Guanidinsalz und 4,2 g (19,6 mmol) 2-Mercaptoethansulfonsäure-Glycinamidsalz in 15 ml Wasser wird mit Natronlauge auf pH 7,5 eingestellt und für 5 Minuten auf etwa 40 °C erwärmt. Anschliessend wird die Reaktionslösung auf 0 °C abgeschreckt, mit Schwefelsäure auf pH 4,5 eingestellt, mit 70 ml Aceton versetzt und 3 Tage bei 4 °C aufbewahrt. Der Niederschlag wird abgesaugt und aus Wasser/Aceton umkristallisiert.

F. ab 85 °C (Zersetzung) ; Ausbeute : 430 mg (14 % der Theorie).

Beispiel 4

4-(2-Sulfo-ethylthio)-Cyclophosphamid-Argininsalz (L-Arginin).

37,2 g (74,5 mmol) 4-(2-Sulfo-ethylthio)-cyclophosphamid-Cyclohexylaminsalz werden in 320 ml destilliertem Wasser bei 5 °C gelöst (pH 4,3) und über eine auf 4 °C gekühlte Säule mit 150 ml Kationenaustauscher gegeben. Es handelt sich um ein gelförmiges Polystyrolharz mit einem Gehalt von 8 % Divinylbenzol, welches Sulfonsäuregruppen enthält, die mit Arginin beladen sind.

Durchflußgeschwindigkeit : 6 ml/Minute. Mit 250 ml Wasser wird nachgespült. Das auf 4 °C gekühlte Eluat wird mit kaltem Wasser auf eine 5 %ige Lösung verdünnt und anschliessend lyophilisiert.

F. 85-90 °C (Zersetzung) ; Ausbeute : 42,9 g (100 % der Theorie).

Der Zusatz einer Puffersubstanz und/oder einer Mercaptoalkylsulfonsäure kann wie folgt erfolgen :

a) Zusatz von Natriumcitratpuffer

Man verfährt wie oben angegeben, fängt jedoch das Eluat in Natriumcitratpuffer (pH 4,1) auf und verdünnt zum Beispiel anschliessend auf eine Lösung, die 0,5 molar an Natriumcitrat und 5 %ig an Wirkstoff ist. Abschliessend wird lyophilisiert.

Ausbeute : 42,9 g (100 % der Theorie), Verbindung nach Beispiel 4 mit Natriumcitratpuffer.

b) Zusatz von Natriumcitratpuffer und Natrium-2-mercapto-ethansulfonat (Mesna).

Man verfährt wie bereits angegeben, fängt jedoch das Eluat in einer gekühlten Natriumcitratpuffer-Lösung (pH 4,1), die 8,2 g (50 mmol) Mesna enthält, auf und lyophilisiert anschliessend.

Ausbeute : 42,9 g (100 % der Theorie) Verbindung nach Beispiel 4 mit Mesna und Natriumcitratpuffer.

Beispiel 5

4-(2-Sulfo-ethylthio)-cyclophosphamid-Lysinsalz (L-Lysin).

37,3 g (74,5 mmol) 4-(2-Sulfo-ethylthio)-cyclophosphamid-Cyclohexylaminsalz werden analog Beispiel 4 an einem Ionenaustauscher (protonierte Lysin-Form) eluiert und anschliessend lyophilisiert.

F. ab 85 °C (Zersetzung) ; Ausbeute : 40,8 g (100 % der Theorie).

Eine geänderte Arbeitsweise ist zum Beispiel die folgende :

82,4 g (16,5 mmol) 4-(2-Sulfo-ethylthio)-cyclophosphamid-Cyclohexylaminsalz werden in 850 ml destilliertem Wasser bei 5 °C gelöst. Die Lösung wird mit einigen Körnern starksaurem Ionenaustauscher (mit Sulfonsäuregruppen) auf pH 4,1 eingestellt und bei einer Tropfgeschwindigkeit von 50 ml/Minute über eine auf 4 °C gekühlte Säule mit 800 ml Ionenaustauscher* mit 820 mmol Sulfonsäure-L-Lysin-Gruppen gegeben. Die ersten 180 ml des Eluats werden verworfen und das folgende Eluat unter Rühren und Eiswasserkühlung mit insgesamt ca. 1,5 ml starksaurem Ionenaustauscher (mit Sulfonsäuregruppen) kontinuierlich auf pH 4,1 eingestellt. Der Ionenaustauscher wird mit 900 ml destilliertem, auf 0 °C gekühltem Wasser nachgespült. Anschliessend wird das Eluat mit kaltem Wasser auf eine 5 %ige Lösung verdünnt und sofort lyophilisiert.

F. ab 85 °C, Ausbeute : 90 g (100 % der Theorie).

Verbindung nach Beispiel 5 mit Lysin-Citratpuffer (Lysin + Citronensäure).

7,2 g (14,4 mmol) 4-(2-Sulfo-ethylthio)-cyclophosphamid-Cyclohexylaminsalz werden in 80 ml 0,05 m Natriumcitratpuffer (pH 4,1) bei 4 °C gelöst und über eine auf 4 °C gekühlte Säule mit 40 ml Kationenaustauscherharz (protonierte Lysin-Form) gegeben. Man spült mit 80 ml Pufferlösung nach, füllt das Eluat auf 150 g Lösung auf und lyophilisiert.

Ausbeute : 7,9 g (100 % der Theorie) Verbindung nach Beispiel 5 mit Lysin-Citratpuffer.

* Es handelt sich um den gleichen Ionenaustauscher wie bei Beispiel 4.

Verbindung nach Beispiel 5 mit 2-Mercaptoethansulfonsäure-Lysinsalz und Lysin-Citratpuffer.

7,2 g (14,4 mmol) 4-(2-Sulfo-ethylthio)-cyclophosphamid-Cyclohexylaminsalz und 1,5 g (9,2 mmol) Mesna werden in 80 ml 0,05 m Natriumcitratpuffer pH 4,1 bei 4 °C gelöst und über eine auf 4 °C gekühlte Säule mit 40 ml Kationenaustauscherharz (protonierte Lysin-Form) gegeben. Man spült mit 50 und 30 ml Pufferlösung, füllt das gekühlte Eluat auf 150 g Lösung auf und lyophilisiert.

Ausbeute : 7,9 g (100 % der Theorie) Verbindung nach Beispiel 5 mit 2,6 g (100 % der Theorie) 2-Mercaptoethansulfonsäure-Lysinsalz und Lysincitratpuffer (pH 4,1).

Beispiel 6

4-(2-Sulfoethylthio)-cyclophosphamid-Glycinamidsalz.

2,9 g (8,6 mmol) 4-(2-Hydroxy-ethylthio)-cyclophosphamid und 5,6 g (26 mmol) 2-Mercaptoethansulfonsäure-Glycinamidsalz werden in 35 ml destilliertem Wasser gelöst. Der pH-Wert wird mit Glycinamid auf etwa 8 eingestellt. Die Reaktionslösung wird für ca. 4 Minuten auf etwa 40 °C erwärmt, dann auf 0 °C abgeschreckt und, nachdem der pH-Wert auf etwa 4,5 mittels 2-Mercapto-ethansulfonsäure gesenkt wurde, mit 500 ml Aceton versetzt. Nach einigen Tagen bei 4 °C wird abgesaugt und aus Wasser/Aceton umkristallisiert.

F. ab 85 °C.

Ausbeute : 410 mg (9 % der Theorie).

Das Salz enthält etwa 1 Äquivalent Aceton.

Beispiele für pharmazeutische Zubereitungen

a) Beispiel für die Herstellung eines Lyophilisats von 4-Sulfo-ethylthio-cyclophosphamid-Lysinsalz.

90 g 4-Sulfo-ethylthio-cyclophosphamid-L-Lysinsalz werden in 1 500 ml auf 4 °C gekühltes Wasser für Injektionszwecke unter Rühren gelöst. Anschliessend wird mit Wasser von 4 °C auf 1 800 ml aufgefüllt. Mit einigen Körnern regeneriertem Kationenaustauscher ($H^+$-Form) wird der pH auf etwa 4,2 eingestellt. Zur Herstellung der Lyophilisate wird obige Lösung in bekannter Weise einer Sterilfiltration unterzogen. Das Auffanggefäß wird gekühlt. Alle der Sterilfiltration folgenden Arbeitsgänge werden unter aseptischen Bedingungen durchgeführt.

Die sterile Lösung wird zu 2 ml in eine 10 ml Injektionsflasche abgefüllt. Der Wirkstoffgehalt beträgt 100 mg.

Die Flaschen werden mit sterilen Gefriertrocknungsstopfen versehen und in einer Gefriertrocknungsanlage lyophilisiert. Anschließend wird die Anlage mit sterilem, getrocknetem Stickstoff belüftet und die Ampullenflaschen in der Anlage verschlossen. Zur Herstellung einer applizierbaren Injektionslösung wird der Inhalt der Flaschen in 5 ml Wasser für Injektionszwecke aufgelöst.

Das Lyophilisat ist bei 0-6 °C (Kühlschrank) zu lagern.

b) Beispiel für die Herstellung eines Lyophilisats von 4-(2-Sulfo-ethylthio)-cyclophosphamid-Lysinsalz (L-Lysin) mit Citronensäure-Lysin-Puffer.

1. Eine Ionenaustauschersäule mit Kühlmantel wird mit 1 300 ml eines sauren Ionenaustauschers beladen, mit 2 Litern 10 %iger Salzsäure regeneriert und mit Wasser für Injektionszwecke neutral und chloridionenfrei gewaschen.

2. Anschliessend wird die Säule mit Hilfe von 3 Litern einer 10 %igen Lysinlösung beladen, durch Waschen mit Wasser für Injektionszwecke von überschüssigem Lysin befreit und neutral gewaschen.

3. Über die Säule werden 1,4 Liter einer Lösung folgender Zusammensetzung gegeben :

| | |
|---|---|
| 4-(Sulfo-ethylthio)-cyclophosphamid Cyclohexylaminsalz | 137,12 g |
| Citronensäure wasserfrei | 28,83 g |
| 1 N NaOH | 193,20 ml |
| Wasser für Injektionszwecke | ad 1,4 Liter |

Wirk- und Hilfsstoffe werden in Wasser von ca. 4 °C gelöst. Der pH-Wert der Lösung beträgt 4,1. Auch die Kationenaustauschersäule wird nun auf ca. 4 °C gekühlt. Obige Lösung wird über die Säule gegeben. Die Durchflußgeschwindigkeit beträgt 10 ml/Minute.

Das Eluat wird in einer gekühlten Vorlage aufgefangen, wobei die ersten 300 ml als Vorlauf verworfen werden. Anschliessend wird mit auf 4 °C abgekühltem Wasser für Injektionszwecke die Säule gewaschen und das Gesamtvolumen des Eluats auf 3 Liter aufgefüllt.

Das Eluat, das zu Lyophilisaten weiterverarbeitet werden soll, hat folgende Zusammensetzung :

| | |
|---|---|
| 4-(2-Sulfo-ethylthio)-cyclophosphamid-Lysinsalz (L-Lysin) | 150,00 g |
| Citronensäure wasserfrei | 28,83 g |
| L-Lysin wasserfrei | 28,24 g |
| Wasser für Injektionszwecke | 2 870,93 g |
| | 3 078,00 g |
| | = 3 000 ml |

4. Zur Herstellung der Lyophilisate wird obige Lösung in bekannter Weise einer Sterilfiltration unterzogen. Das Auffanggefäss wird gekühlt. Alle der Sterilfiltration folgenden Arbeitsgänge werden unter aseptischen Bedingungen durchgeführt.

Die sterile Lösung wird wie folgt in Injektionsflaschen abgefüllt :

2 ml Lösung in eine 10 ml Injektionsflasche. Der Wirkstoffgehalt beträgt 100 mg.
10 ml Lösung in eine 30 ml Injektionsflasche. Der Wirkstoffgehalt beträgt 500 mg.

Die Flaschen werden mit sterilen Gefriertrocknungsstopfen versehen und in einer Gefriertrocknungsanlage lyophilisiert. Anschliessend wird die Anlage mit sterilem, getrocknetem Stickstoff belüftet und die Ampullenflaschen in der Anlage verschlossen.

Zur Herstellung einer applizierbaren Injektionslösung wird der Inhalt der Flaschen mit 100 mg Wirkstoff in 5 ml, mit 500 mg Wirkstoff in 25 ml Wasser für Injektionszwecke aufgelöst.

c) Beispiel für die Herstellung eines Lyophilisates von 4-Sulfo-ethylthio-cyclophosphamid-Argininsalz.

90 g 4-Sulfo-ethylthio-cyclophosphamid-Argininsalz und 135 g Natrium-2-mercapto-ethansulfonat werden in 1 500 ml auf 4 °C gekühltem Wasser für Injektionszwecke unter Rühren gelöst. Nach vollständigem Lösen wird mit Wasser von 4 °C auf 1 800 ml aufgefüllt. Mit einigen Körnern regeneriertem Kationenaustauscher ($H^+$-Form) wird der pH auf etwa 4,2 eingestellt. Zur Herstellung der Lyophilisate wird obige Lösung in bekannter Weise einer Sterilfiltration unterzogen. Das Auffanggefäß wird gekühlt. Alle der Sterilfiltration folgenden Arbeitsgänge werden unter aseptischen Bedingungen durchgeführt. Die sterile Lösung wird zu 2 ml in eine 10 ml Injektionsflasche abgefüllt. Der Wirkstoffgehalt beträgt 100 mg. Die Flaschen werden mit sterilen Gefriertrocknungsstopfen versehen und in einer Gefriertrocknungsanlage lyophilisiert. Anschliessend wird die Anlage mit sterilem getrocknetem Stickstoff belüftet und die Ampullenflaschen in der Anlage verschlossen. Zur Herstellung einer applizierbaren Injektionslösung wird der Inhalt der Flaschen in 5 ml Wasser für Injektionszwecke aufgelöst.

Das Lyophilisat ist bei 0-6 °C (Kühlschrank) zu lagern.

**Patentansprüche**

1. Salze von Oxazaphosphorin-Derivaten der allgemeinen Formel

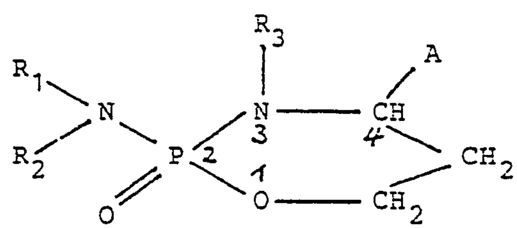

(I)

worin $R_1$, $R_2$ und $R_3$, die gleich oder verschieden voneinander sein können, Wasserstoff, Methyl, Ethyl, 2-Chlorethyl oder 2-Methansulfonyloxyethyl darstellen und dabei mindestens zwei dieser Reste 2-Chlorethyl und/oder 2-Methansulfonyloxyethyl sind und A die Gruppe $—S—alk—SO_3H$ oder $—N(OH)—CONH—alk—CO_2H$ ist und alk einen, gegebenenfalls eine Mercaptogruppe enthaltenden, $C_2$-$C_6$-Alkylenrest darstellt, wobei alk auch $—CH_2—$ sein kann, falls an der Gruppe alk die Carboxygruppe sitzt, mit Homocysteinthiolacton oder α-Amino-ε-caprolactam oder einer basischen Verbindung der Formel

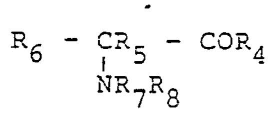

(II)

worin $R_4$ eine Hydroxygruppe, eine Aminogruppe oder eine $C_1$-$C_6$-Alkoxygruppe ist, $R_5$ Wasserstoff oder eine Difluormethylgruppe ist, $R_6$ Wasserstoff, einen Indolyl-(3)-methylrest, Imidazolyl-(4)-methylrest, eine $C_1$-$C_{10}$-Alkylgruppe oder eine $C_1$-$C_{10}$-Alkylgruppe, die durch eine Hydroxygruppe, eine $C_1$-$C_6$-Alkoxy-

gruppe, eine Mercaptogruppe, eine $C_1$-$C_6$-Alkylthiogruppe, eine Phenylgruppe, eine Hydroxyphenylgruppe, eine Amino-$C_1$-$C_6$-alkylthiogruppe, eine Amino-$C_1$-$C_6$-alkyloxygruppe, eine Aminogruppe, eine Aminocarbonylgruppe, eine Ureidogruppe ($H_2NCONH$—), eine Guanidinogruppe oder eine $C_1$-$C_6$-Alkoxycarbonylgruppe substituiert ist, bedeutet oder worin $R_6$ zusammen mit dem Strukturteil $\geq CR_5(NR_7R_8)$ den Prolinrest, den 4-Hydroxy-prolinrest oder das 2-Oxo-3-amino-3-difluormethyl-piperidin bildet und die Reste $R_7$ und $R_8$ Wasserstoff oder $C_1$-$C_6$-Alkylreste darstellen.

2. Salze gemäß Anspruch 1, dadurch gekennzeichnet, daß die basische Verbindung eine Verbindung der Formel II ist, worin $R_4$ eine Hydroxygruppe oder die Aminogruppe ist, die Reste $R_5$, $R_7$ und $R_8$ Wasserstoff sind und $R_6$ Wasserstoff oder eine $C_1$-$C_4$-Alkylgruppe bedeutet, welche insbesondere in der ω-Stellung durch eine Aminogruppe oder eine Guanidinogruppe substituiert sein kann.

3. Verfahren zur Herstellung von Salzen von Oxazaphosphorin-Derivaten der allgemeinen Formel I gemäß Anspruch 1, dadurch gekennzeichnet, daß man eine Verbindung der allgemeinen Formel

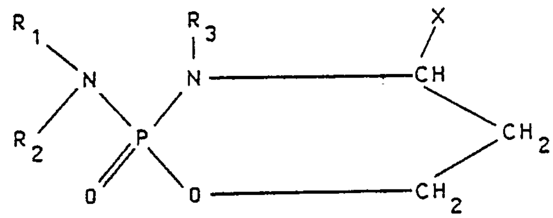

(III)

worin X eine Hydroxygruppe oder eine $C_1$-$C_4$-Alkoxygruppe ist, mit dem Salz der Verbindung

AH (IV)

worin A die angegebenen Bedeutungen hat und die basische Salzkomponente Homocysteinthiolacton, α-Amino-ε-caprolactam oder die basische Verbindung der Formel II mit den angegebenen Bedeutungen für die Reste $R_4$ bis $R_8$ ist, umsetzt.

4. Verfahren zur Herstellung von Salzen von Oxazaphosphorin-Derivaten der allgemeinen Formel I gemäß Anspruch 1, dadurch gekennzeichnet, daß man eine Verbindung der allgemeinen Formel

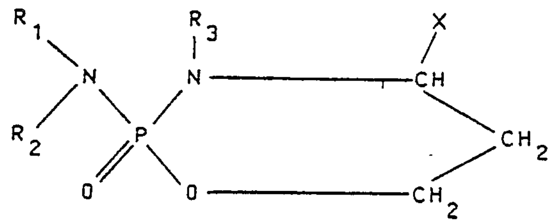

(III)

worin X eine Hydroxygruppe oder eine $C_1$-$C_4$-Alkoxygruppe ist, zuerst mit der Verbindung

AH (IV)

umsetzt und anschließend mit Homocysteinthiolacton α-Amino-ε-caprolactam oder der basischen Verbindung der Formel II umsetzt.

5. Verfahren zur Herstellung von Salzen von Oxazaphosphorin-Derivaten der allgemeinen Formel I gemäß Anspruch 1, dadurch gekennzeichnet, daß man eine Verbindung der allgemeinen Formel III, worin X eine gegebenenfalls durch eine Carboxygruppe, eine Hydroxygruppe oder $C_1$-$C_4$-Carbalkoxygruppe substituierte $C_1$-$C_{10}$-Alkylthiogruppe, eine Benzylthiogruppe oder eine $C_1$-$C_6$-Alkanoylthiogruppe ist, oder worin X die Gruppe —N(OH)—CO—NHR darstellt und R Wasserstoff, eine $C_1$-$C_6$-Alkylgruppe, eine Benzylgruppe oder eine gegebenenfalls durch $C_1$-$C_4$-Alkylreste oder Halogen substituierte Phenylgruppe bedeutet, oder worin X die Gruppe A ist und der Rest X auch in der Salzform vorliegen kann, mit dem Überschuß einer Verbindung der Formel

A'H (V)

oder eines Salzes dieser Verbindung A'H oder mit Homocysteinthiolacton, α-Amino-ε-caprolactam oder der basischen Verbindung der Formel II mit den angegebenen Bedeutungen für die Reste $R_4$ bis $R_8$ umsetzt, wobei A' von A verschieden ist und eine der für A angegebenen Bedeutungen hat.

6. Verfahren zur Herstellung von Salzen von Oxazaphosphorin-Derivaten der allgemeinen Formel I gemäß Anspruch 1, dadurch gekennzeichnet, daß man eine Verbindung der Formel I oder das Salz einer Verbindung der allgemeinen Formel I mit Homocysteinthiolacton, α-Amino-ε-caprolactam oder einer basischen Verbindung der Formel II mit den angegebenen Bedeutungen für $R_4$ bis $R_8$ beziehungsweise mit deren Salzen unter Bildung des entsprechenden Salzes umsetzt.

7. Verfahren zur Herstellung von Salzen von Oxazaphosphorin-Derivaten der allgemeinen Formel I gemäß Anspruch 1, dadurch gekennzeichnet, daß man in Verbindungen der Formel I die basische Komponente oder den Säurewasserstoff der Gruppe A, falls diese nicht als Salz vorliegt, gegen eine andere basische Verbindung im Rahmen der hierfür gegebenen Definition austauscht.

8. Arzneimittel, enthaltend ein Salz nach einem oder mehreren der vorangegangenen Ansprüche neben üblichen Träger- und/oder Verdünnungs- beziehungsweise Hilfsstoffen.

9. Arzneimittel nach Anspruch 8, dadurch gekennzeichnet, daß es zusätzlich einen Puffer und/oder das Alkalisalz einer Mercapto-$C_2$-$C_6$-alkansulfonsäure enthält.

10. Verfahren zur Herstellung eines Arzneimittels, dadurch gekennzeichnet, daß eine Verbindung nach Anspruch 1 oder 2 mit gebräuchlichen pharmazeutischen Trägerstoffen oder Verdünnungsmitteln beziehungsweise sonstigen Hilfsstoffen zu pharmazeutischen Zubereitungen verarbeitet beziehungsweise in eine therapeutisch anwendbare Form gebracht wird.

11. Verfahren nach Anspruch 10, dadurch gekennzeichnet, daß Puffer und/oder das Alkalisalz einer Mercapto-$C_2$-$C_6$-alkansulfonsäure mitverwendet werden.

12. Verwendung von Verbindungen nach Anspruch 1 oder 2 zur Herstellung von Arzneimitteln.

**Claims**

1. Salts of oxazaphosphorine derivatives of the general formula

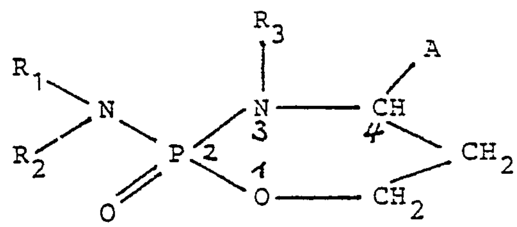

(I)

wherein $R_1$, $R_2$ and $R_3$, which can be identical or different from one another, represent hydrogen, methyl, ethyl, 2-chloroethyl or 2-methanesulphonyloxyethyl and in this case at least two of these radicals are 2-chloroethyl and/or 2-methanesulphonyloxyethyl and A is the group —S—alk—$SO_3H$ or —N(OH)—CONH—alk—$CO_2H$ and alk represents a $C_2$-$C_6$-alkylene radical optionally containing a mercapto group, where alk can also be —$CH_2$— if the carboxyl group is on the group alk, with homocysteine thiolactone or α-amino-ε-caprolactam or a basic compound of the formula

$$R_6 - \underset{\displaystyle NR_7R_8}{\underset{|}{C}R_5} - COR_4 \qquad (II)$$

wherein $R_4$ is a hydroxyl group, an amino group or a $C_1$-$C_6$-alkoxy group, $R_5$ is hydrogen or a difluoromethyl group, $R_6$ denotes hydrogen, a 3-indolylmethyl radical, a 4-imidazolylmethyl radical, a $C_1$-$C_{10}$-alkyl group or a $C_1$-$C_{10}$-alkyl group which is substituted by a hydroxyl group, a $C_1$-$C_6$-alkoxy group, a mercapto group, a $C_1$-$C_6$-alkylthio group, a phenyl group, a hydroxyphenyl group, an amino-$C_1$-$C_6$-alkylthio group, an amino-$C_1$-$C_6$-alkyloxy group, an amino group, an aminocarbonyl group, a ureido group ($H_2NCONH$—), a guanidino group or a $C_1$-$C_6$-alkoxy-carbonyl group, or wherein $R_6$ together with the structural moiety $>CR_5(NR_7R_8)$ forms the proline radical, the 4-hydroxy-proline radical or the 2-oxo-3-amino-3-difluoromethylpiperidine and the radicals $R_7$ and $R_8$ represent hydrogen or $C_1$-$C_6$-alkyl radicals.

2. Salts according to Claim 1, characterized in that the basic compound is a compound of the formula II, wherein $R_4$ is a hydroxyl group or the amino group, the radicals $R_5$, $R_7$ and $R_8$ are hydrogen and $R_6$ denotes hydrogen or a $C_1$-$C_4$-alkyl group which, in particular in the ω-position, can be substituted by an amino group or a guanidino group.

3. Process for the preparation of salts of oxazaphosphorine derivatives of the general formula I according to Claim 1, characterized in that a compound of the general formula

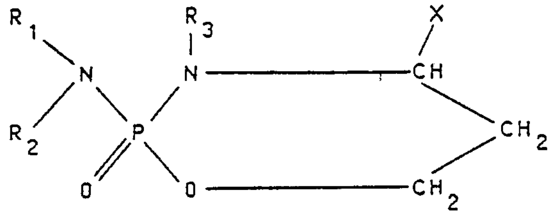

(III)

wherein X is a hydroxyl group or a $C_1$-$C_4$-alkoxy group, is reacted with the salt of the compound

AH (IV)

wherein A has the meanings indicated and the basic salt component is homocysteine thiolactone, α-amino-ε-caprolactam or the basic compound of the formula II having the meanings indicated for the radicals $R_4$ to $R_8$.

4. Process for the preparation of salts of oxazaphosphorine derivatives of the general formula I according to Claim 1, characterized in that a compound of the general formula

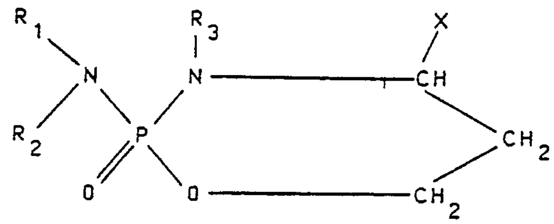

(III)

wherein X is a hydroxyl group or a $C_1$-$C_4$-alkoxy group, is first reacted with the compound

AH (IV)

and subsequently with homocysteine thiolactone, α-amino-ε-caprolactam or the basic compound of the formula II.

5. Process for the preparation of salts of oxazaphosphorine derivatives of the general formula I according to Claim 1, characterized in that a compound of the general formula III, wherein X is a $C_1$-$C_{10}$-alkyl-thio group which is optionally substituted by a carboxyl group, a hydroxyl group or a $C_1$-$C_4$-carbalkoxy group, a benzylthio group or a $C_1$-$C_6$-alkanoylthio group, or wherein X represents the group —N(OH)—CO—NHR and R denotes hydrogen, a $C_1$-$C_6$-alkyl group, a benzyl group or a phenyl group which is optionally substituted by $C_1$-$C_4$-alkyl radicals or halogen, or wherein X is the group A and the radical X can also be present in the salt form, is reacted with excess of a compound of the formula

A'H (V)

or a salt of this compound A'H or with homocysteine thiolactone, α-amino-ε-caprolactam or the basic compound of the formula II having the meanings indicated for the radicals $R_4$ to $R_8$, where A' is different from A and has one of the meanings indicated for A.

6. Process for the preparation of salts of oxazaphosphorine derivatives of the general formula I according to Claim 1, characterized in that a compound of the formula I or the salt of a compound of the general formula I is reacted with homocysteine thiolactone, α-amino-ε-caprolactam or a basic compound of the formula II having the meanings indicated for $R_4$ to $R_8$ or with their salts with the formation of the corresponding salts.

7. Process for the preparation of salts of oxazaphosphorine derivatives of the general formula I according to Claim 1, characterized in that the basic components or the acidic hydrogen of the group A, if this is not present as a salt, is exchanged for another basic compound in the context of the definition given therefor in compounds of the formula I.

8. Medicaments, containing a salt according to one or more of the foregoing claims in addition to customary excipients and/or diluents or auxiliaries.

9. Medicaments according to Claim 8, characterized in that it additionally contains a buffer and/or the alkali metal salt of a mercapto-$C_2$-$C_6$-alkanesulphonic acid.

10. Process for the preparation of a medicament, characterized in that a compound according to Claim 1 or 2 is processed to give pharmaceutical preparations using customary pharmaceutical excipients or diluents or other auxiliaries, or is brought into a therapeutically utilizable form.

11. Process according to Claim 10, characterized in that buffer and/or the alkali metal salt of a mercapto-$C_2$-$C_6$-alkanesulphonic acid are additionally used.

12. Use of compounds according to Claim 1 or 2 for the preparation of medicaments.

**Revendications**

1. Sels de dérivés d'oxazaphosphorine de formule générale

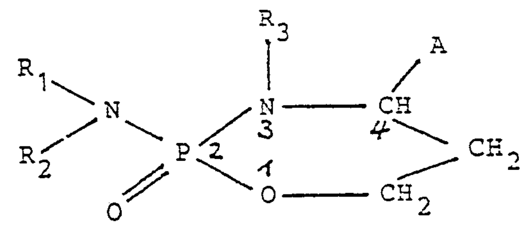

(I)

dans laquelle $R_1$, $R_2$ et $R_3$, qui peuvent être identiques ou différents, représentent chacun un atome d'hydrogène, un radical méthyle, éthyle, 2-chloréthyle ou 2-méthane-sulfonyloxyéthyle, deux au moins de ces radicaux représentant un radical 2-chloréthyle et/ou 2-méthane-sulfonyloxyéthyle, et A est mis pour le groupement —S—alk—$SO_3H$ ou —N(OH)—CONH—alk—$CO_2H$, alk représentant un radical alkylène en $C_2$-$C_6$ contenant éventuellement un groupement mercapto, alk pouvant être également mis pour —$CH_2$— dans le cas où le groupe carboxy est situé sur le groupement alk, avec l'homocystéinethiolactone, l'α-amino-ε-caprolactame ou un composé basique de formule

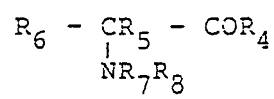

(II)

dans laquelle $R_4$ est un groupe hydroxy, un groupe amino ou un groupe alcoxy en $C_1$-$C_6$, $R_5$ est un atome d'hydrogène ou un groupement difluorométhyle, $R_6$ est un atome d'hydrogène, un radical indolyl-(3)-méthyle, un radical imidazolyl-(4)-méthyle, un groupe alkyle en $C_1$-$C_{10}$ ou un groupe alkyle en $C_1$-$C_{10}$ qui est substitué par un groupe hydroxy, par un groupe alcoxy en $C_1$-$C_6$, par un groupe mercapto, par un groupe $C_1$-$C_6$-alkylthio, par un groupe phényle, par un groupe hydroxyphényle, par un groupe amino $C_1$-$C_6$-alkylthio, par un groupe amino-$C_1$-$C_6$-alkyloxy, par un groupe amino, par un groupe aminocarbonyle, par un groupe uréido ($H_2NCONH$), par un groupe guanidino ou par un groupe $C_1$-$C_6$-alcoxycarbonyle, ou dans laquelle $R_6$ forme, avec la partie structurale $>CR_5(NR_7R_8)$, le radical proline, le radical 4-hydroxyproline ou la 2-oxo-3-amino-3-difluorométhylpipéridine, et les symboles $R_7$ et $R_8$ représentent des atomes d'hydrogène ou des radicaux alkyle en $C_1$-$C_6$.

2. Sels selon la revendication 1, caractérisés en ce que le composé basique est un composé de formule II dans laquelle $R_4$ est un groupe hydroxy ou le groupe amino, les radicaux $R_5$, $R_7$ et $R_8$ sont des atomes d'hydrogène et $R_6$ est un atome d'hydrogène ou un radical alkyle en $C_1$-$C_4$ qui peut être substitué, en particulier en position ω, par un groupe amino ou un groupe guanidino.

3. Procédé de préparation de sels de dérivés d'oxazaphosphorine de formule I selon la revendication 1, caractérisé en ce qu'on fait réagir un composé de formule générale

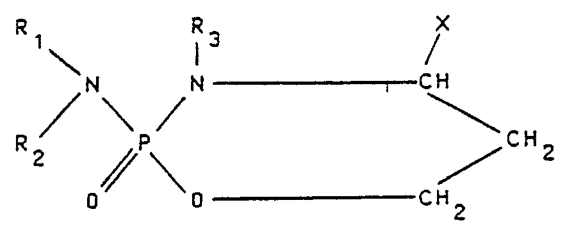

(III)

dans laquelle X est un groupe hydroxy ou un groupe alcoxy en $C_1$-$C_4$, avec le sel du composé

AH (IV)

dans laquelle A a les significations indiquées et le composant basique du sel est l'homocystéinethiolactone, l'α-amino-ε-caprolactame ou le composé basique de formule II avec les significations indiquées pour les radicaux $R_4$ à $R_8$.

4. Procédé de préparation de sels de dérivés d'oxazaphosphorine de formule I selon la revendication 1, caractérisé en ce qu'on fait réagir un composé de formule générale

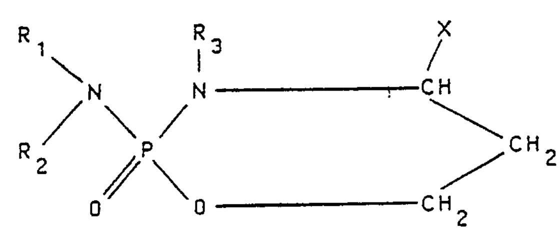

(III)

dans laquelle X est un groupe hydroxy ou un groupe alcoxy en $C_1$-$C_4$, tout d'abord avec le composé

AH (IV)

puis avec l'homocystéinethiolactone, l'α-amino-ε-caprolactame ou le composé basique de formule II.

5. Procédé de préparation de sels de dérivés d'oxazaphosphorine de formule I selon la revendication 1, caractérisé en ce qu'on fait réagir un composé de formule générale III, dans laquelle X est un groupe $C_1$-$C_{10}$-alkylthio éventuellement substitué par un groupe carboxy, par un groupe hydroxy ou par un groupe carbalcoxy en $C_1$-$C_4$, un groupe benzylthio ou un groupe $C_1$-$C_6$-alcanoylthio, ou dans laquelle X représente le groupement —N(OH)—CO—NHR et R représente un atome d'hydrogène, un groupe alkyle en $C_1$-$C_6$, un groupe benzyle ou un groupe phényle éventuellement substitué par des radicaux alkyle en $C_1$-$C_4$ ou des atomes d'halogène, ou dans laquelle X est le groupe A et le radical X peut aussi se présenter sous la forme de sel, avec un excès d'un composé de formule

A'H (V)

ou d'un sel de ce composé A'H ou avec l'homocystéinethiolactone, l'α-amino-ε-caprolactame ou le composé basique de formule II avec les significations indiquées pour les radicaux $R_4$ à $R_8$, A' étant différent de A et ayant l'une des significations indiquées pour A.

6. Procédé de préparation de sels de dérivés d'oxazaphosphorine de formule I selon la revendication 1, caractérisé en ce qu'on fait réagir un composé de formule I ou le sel d'un composé de formule générale I avec l'homocystéinethiolactone, l'α-amino-ε-caprolactame ou un composé basique de formule II avec les significations indiquées pour les radicaux $R_4$ à $R_8$, ou avec les sels de ces composés, avec formation du sel correspondant.

7. Procédé de préparation de sels de dérivés d'oxazaphosphorine de formule I selon la revendication 1, caractérisé en ce que dans les composés de formule I, on échange le composant basique ou l'atome acide d'hydrogène du groupe A, au cas où celui-ci ne se présente pas sous forme de sel, contre un autre composé basique dans le cadre de la définition donnée à cet égard.

8. Médicament, contenant un sel selon la revendication 1 ou 2, outre des excipients et/ou diluants ou encore des adjuvants usuels.

9. Médicament selon la revendication 8, caractérisé en ce qu'il contient en plus une substance tampon et/ou le sel alcalin d'un acide mercapto-$C_2$-$C_6$-alcanesulfonique.

10. Procédé pour la préparation d'un médicament, caractérisé en ce qu'on transforme en préparations pharmaceutiques ou on met sous une forme applicable thérapeutiquement un composé selon la revendication 1 ou 2 avec des excipients ou diluants pharmaceutiques usuels ou avec d'autres adjuvants.

11. Procédé selon la revendication 10, caractérisé en ce qu'on utilise simultanément une substance tampon et/ou le sel alcalin d'un acide mercapto-$C_2$-$C_6$-alcanesulfonique.

12. Utilisation de composés selon la revendication 1 ou 2 pour la préparation de médicaments.